(19) Europäisches Patentamt
European Patent Office
Office européen des brevets

(11) **EP 2 794 285 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **12809796.1**

(22) Anmeldetag: **19.12.2012**

(51) Int Cl.:
***B60B 17/00*** *(2006.01)*

(86) Internationale Anmeldenummer:
**PCT/EP2012/076082**

(87) Internationale Veröffentlichungsnummer:
**WO 2013/092659 (27.06.2013 Gazette 2013/26)**

(54) **RADSCHEIBE FÜR EIN SCHIENENFAHRZEUG**

WHEEL DISC FOR A RAIL VEHICLE

DISQUE DE ROUE DESTINÉ À UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2011 DE 102011121785**

(43) Veröffentlichungstag der Anmeldung:
**29.10.2014 Patentblatt 2014/44**

(73) Patentinhaber: **Voith Patent GmbH
89522 Heidenheim (DE)**

(72) Erfinder:
• **HOLZAPFEL, Michael
89522 Heidenheim (DE)**
• **KAMPS, Andreas
73460 Hüttlingen (DE)**
• **LUBOS, Florian
89542 Herbrechtingen (DE)**

(74) Vertreter: **Dr. Weitzel & Partner
Patent- und Rechtsanwälte mbB
Friedenstrasse 10
89522 Heidenheim (DE)**

(56) Entgegenhaltungen:
EP-A2- 0 760 294     CA-A1- 2 155 914
DE-A1- 4 444 077     DE-A1- 10 346 020

**Beschreibung**

Die Erfindung betrifft eine Radscheibe für ein Schienenfahrzeug nach der im Oberbegriff von Anspruch 1 näher definierten Art, wie sie auch aus Dokument DE 44 44 077 A1 bekannt ist.

Radscheiben für Schienenfahrzeuge sind aus dem allgemeinen Stand der Technik bekannt. Sie bestehen typischerweise aus einer um eine Drehachse umlaufenden Radnabe sowie einem Radkranz, welcher zum Abrollen auf den Schienen bestimmt ist. Die zentral liegende Radnabe und der am äußeren Umfang liegende Radkranz sind dabei über einen sogenannten Steg miteinander verbunden. Dieser Steg, welcher in radialer Richtung gerade oder gebogen ausgeführt wird, ist typischerweise als umlaufende Scheibe ausgebildet. Er kann insbesondere rotationssymmetrisch aufgebaut sein und somit in jedem radialen Schnitt dieselbe oder eine vergleichbare Kontur aufweisen. Unter der Kontur im Sinne der hier vorliegenden Erfindung ist dabei die seitliche begrenzende Oberflächenform der Radscheibe im radialen Schnitt zu verstehen. Eine gerade Radscheibe hätte also eine durch eine Gerade ausgebildete Kontur, eine gebogene Radscheibe eine durch einen S-förmigen Bogen ausgebildete Kontur.

Nun ist es so, dass insbesondere der Übergang von der Radnabe zum Steg und, insbesondere bei kleineren Radscheiben, auch oder alternativ dazu der Übergang zwischen dem Steg und dem Radkranz einer sehr hohen Belastung unterliegt. Um dieser hohen Belastung entgegenzuwirken, sind entsprechende Materialstärken oder geeignete Bearbeitungsschritte zur Verfestigung des Materials in den kritischen Bereichen notwendig. Dies ist aufwändig und teuer und macht die Radscheibe beim Einsatz von hohen Materialstärken entsprechend schwer.

Um dieser Problematik entgegenzuwirken ist es aus der EP 0 794 872 A1 bekannt, dass durch eine komplexe Konstruktionsvorgabe für die Übergänge die Spannungen in der Radscheibe homogenisiert werden, sodass mit geringeren Materialstärken eine hohe Festigkeit erzielt werden kann. Der Aufbau ist dabei außerordentlich komplex und nutzt eine Funktion (Parabel) fünfter Ordnung zur Konstruktion der Übergänge. Dies ist einerseits bei der Konstruktion und andererseits bei der Fertigung aufwändig in der Programmierung.

Die Aufgabe der hier vorliegenden Erfindung besteht nun darin eine Radscheibe für ein Schienenfahrzeug anzugeben, welche eine noch weiter verbesserte Festigkeit ermöglicht und welche darüber hinaus einfach und effizient konstruiert und hergestellt werden kann.

Erfindungsgemäß wird diese Aufgabe durch eine Radscheibe mit den Merkmalen im kennzeichnenden Teil des Patentanspruchs 1 gelöst. Vorteilhafte Ausgestaltungen ergeben sich aus den restlichen hiervon abhängigen Unteransprüchen.

Bei der erfindungsgemäßen Radscheibe für ein Schienenfahrzeug ist es vorgesehen, dass zumindest einer der Übergänge zwischen dem Steg und der Radnabe und/oder zwischen dem Steg und dem Radkranz auf wenigstens einer axialen Seite in jeder seiner radialen Schnittebenen so ausgebildet ist, dass die folgenden drei Bedingungen erfüllt sind. Der Übergang wird grundsätzlich durch eine Tangensfunktion ausgebildet. Eine solche Tangensfunktion ist einfach, effizient und ermöglicht einen sehr gleichmäßigen Übergang mit hoher Festigkeit und sehr guter Spannungsverteilung auf den gesamten Bereich des Übergangs. Diese Tangensfunktion geht an ihrem einen Ende tangentenstetig in die Kontur des Stegs über. Außerdem geht die Tangensfunktion an ihrem anderen Ende tangentenstetig in die Kontur der Radnabe oder des Radkranzes, je nachdem, welchen der Übergänge sie ausbildet, über. Durch diesen tangentenstetigen Anschluss der Tangensfunktion an die Kontur entweder der Radnabe und/oder des Radkranzes entsteht ein Aufbau, welcher sehr einfach und effizient konstruiert und für die Fertigung programmiert werden kann. Er ermöglicht mit minimalem Materialeinsatz durch eine Vergleichmäßigung der Spannungsverteilung eine sehr hohe Festigkeit der Radscheibe.

Eine vorteilhafte Weiterbildung der erfindungsgemäßen Radscheibe sieht es außerdem vor, dass der tangentenstetige Übergang der Tangentenfunktion in die Kontur der Radnabe oder des Radkranzes im Bereich des Wendepunkts der Tangensfunktion erfolgt. Der Winkel der Tangensfunktion im Bereich des Wendepunkts gegenüber einer Ordinate, also der radialen Richtung am Beispiel des geraden Stegs, lässt sich bei der Konstruktion der Tangensfunktion in gewissen Grenzen frei wählen. Ein Übergang im Bereich des Wendepunkts lässt sich so vergleichsweise einfach an beispielsweise eine gerade Kontur mit einem vorgegebenen Winkel gegenüber der axialen Richtung anpassen, sodass der Übergang entsprechend harmonisch wird und Spannungsspitzen im Bereich des Übergangs nachhaltig minimiert werden können.

Gemäß einer besonders günstigen Ausgestaltung der erfindungsgemäßen Radscheibe kann es ferner vorgesehen sein, dass die Kontur der Radnabe oder des Radkranzes im Anschluss an die Tangensfunktion durch einen Kreisbogen und eine sich diesem Kreisbogen anschließende Gerade ausgebildet ist, wobei der Kreisbogen tangentenstetig in die Gerade übergeht. Diese Ausgestaltung der Kontur der Radnabe oder des Radkranzes durch einen Kreisbogen und eine sich daran tangentenstetig anschließende Gerade ist bei der Konstruktion der Radscheibe von besonderem Vorteil. Der Kreisbogen erlaubt es, einen annähernd beliebigen Endwinkel der Tangensfunktion im Bereich des Übergangs zur Radnabe oder des Radkranzes durch den sich tangentenstetig anschließenden Kreisbogen harmonisch aufzunehmen und in eine sich anschließende tangentenstetig zu dem Kreisbogen ausgebildete Gerade überzuleiten. Dadurch entsteht ein sehr harmonischer und spannungsarmer Übergang von der Tangensfunktion in die Gerade der Radnabe oder des Radkranzes.

In einer weiteren sehr günstigen Ausgestaltung der Radscheibe ist es ferner vorgesehen, dass der tangentenstetige Übergang der Tangensfunktion in den Kreisbogen im Bereich der maximalen Krümmung der Tangensfunktion erfolgt. Mathematisch lässt sich ein Punkt der maximalen Krümmung der Tangensfunktion einfach bestimmen. Der Kreisbogen kann nun in diesem Punkt oder im Bereich dieses Punkts tangentenstetig an die Tangensfunktion angesetzt werden. Hierdurch wird eine weitere Verbesserung der Festigkeit erreicht.

Dies gilt insbesondere dann, wenn gemäß einer sehr vorteilhaften Weiterbildung hiervon der Radius des Kreisbogens der maximalen Krümmung der Tangensfunktion entspricht. Hierdurch wird ein Übergang erzielt, bei welchem keine Veränderung des Krümmungsradius im Bereich des Übergangs von der Tangensfunktion in den Kreisbogen auftritt. Untersuchungen und Berechnungen haben gezeigt, dass dies hinsichtlich des Spannungsverlaufs ideal ist, sodass durch diese besondere Ausgestaltung die besten Ergebnisse hinsichtlich der Festigkeit des Übergangs der Tangensfunktion in die Kontur der Radnabe und/oder des Radkranzes zu erzielen sind.

Wie oben bereits erwähnt, lässt sich der Winkel der Tangensfunktion im Wendepunkt gegenüber der Ordinate in gewissen Grenzen frei wählen. Um ideale Bedingungen hinsichtlich der Festigkeit durch die Verwendung der Tangensfunktion zu erreichen, ist dabei ein Winkel gegenüber der Ordinate von 35 bis 55°, vorzugsweise von 40 bis 50°, besonders bevorzugt von ca. 45° ideal. Mit der Auswahl eines Winkels in diesen Intervallen lässt sich die beste Festigkeit des Übergangs erreichen.

In einer vorteilhaften Weiterbildung der erfindungsgemäßen Radscheibe kann es ferner vorgesehen sein, dass die Kontur des Stegs im Anschluss an die Tangensfunktion eine Anschlusskontur in Form eines Bogens aufweist. Ein solcher Bogen welcher tangentenstetig in die Tangensfunktion übergeht, ist insbesondere bei gebogenen Stegen, also im radialen Schnitt S-förmig verlaufenden Stegen, von besonderem Vorteil.

In einer alternativen Ausgestaltung hiervon ist es dagegen vorgesehen, dass die Kontur des Stegs im Anschluss an die Tangensfunktion eine Außenkontur in Form einer Geraden aufweist, wobei die Gerade um einen Winkel von weniger als 20°, vorzugsweise 0,5 bis 15° zur radialen Richtung geneigt ausgebildet ist. Die radiale Richtung steht bei dem hier beschriebenen geraden Steg senkrecht auf der axialen Richtung. Die Geraden der Anschlusskontur verlaufen nicht parallel zu dieser senkrechten radialen Richtung, sondern in einem Winkel hierzu. Der Winkel ist dabei so ausgewählt, dass der Steg sich ausgehend vom Ende der Tangensfunktion verjüngt. Der Winkel kann vorzugsweise mehr als 0,5° betragen. Er wird im allgemeinen weniger als 20°, vorzugsweise weniger als 15° betragen. Der Winkel ermöglicht den idealen Übergang in die Tangensfunktion. Ein geeignet ausgewählter Winkel in diesem Bereich ermöglicht so einen sehr harmonischen tangentenstetigen Übergang von der Tangensfunktion in die Kontur des Stegs und verringert damit Spannungsspitzen im Bereich des Stegs, sodass mit minimalem Materialeinsatz die Festigkeit erhöht werden kann.

In einer sehr vorteilhaften Weiterbildung hiervon ist es, unabhängig davon, ob die Anschlusskontur als Gerade oder als Bogen ausgebildet ist, vorgesehen, dass die Tangensfunktion so ausgebildet ist, dass der tangentenstetige Übergang zur Anschlusskontur abgeschlossen ist, bevor in wenigstens einem der radialen Schnitte ein Anschlussbereich für ein Aufnahmeelement und/oder Anbauelement an dem Steg angeordnet ist. Die Tangensfunktion sowie der Übergang der Tangensfunktion in die Anschlusskontur des Stegs ist in ihrer radialen Ausdehnung so ausgewählt, dass diese in jedem Fall abgeschlossen ist, bevor Anbauelemente und/oder Aufnahmeelemente, beispielsweise Aufnahmeelemente für eine Bremsscheibe oder andere an der Radscheibe anzuschließende Elemente, vorgesehen sind. Dies garantiert, dass solche Anbauelemente und/oder Aufnahmeelemente, welche den Verlauf der angedachten Tangensfunktion stören würden, in deren Bereich nicht auftreten. Die Tangensfunktion wird also in ihrer radialen Ausdehnung so angepasst, dass der harmonische durch die Tangensfunktion geschaffene Übergang mit besten Festigkeitseigenschaften nicht von solchen "Störstellen" unterbrochen wird. Dies gewährleistet die beste Festigkeit. Ungeachtet dessen kann es vorgesehen sein, dass im Fußbereich des Stegs, im Material der Radnabe eine Schmierölbohrung zur Schmierung der Radnabe auf einer Achse vorgesehen ist. Eine solche Schmierölbohrung ist nicht als Störstelle im Sinne der hier vorliegenden Erfindung zu verstehen.

Weitere vorteilhafte Ausgestaltungen der erfindungsgemäßen Radscheibe ergeben sich aus dem Ausführungsbeispiel, welches nachfolgend unter Bezugnahme auf die Figuren näher beschrieben wird.

Dabei zeigen:

Figur 1    eine Seitenansicht einer Radscheibe;

Figur 2    einen radialen Schnitt durch eine Hälfte einer Radscheibe; und

Figur 3    eine erfindungsgemäße Ausgestaltung des Übergangs zwischen der Radnabe und dem Steg.

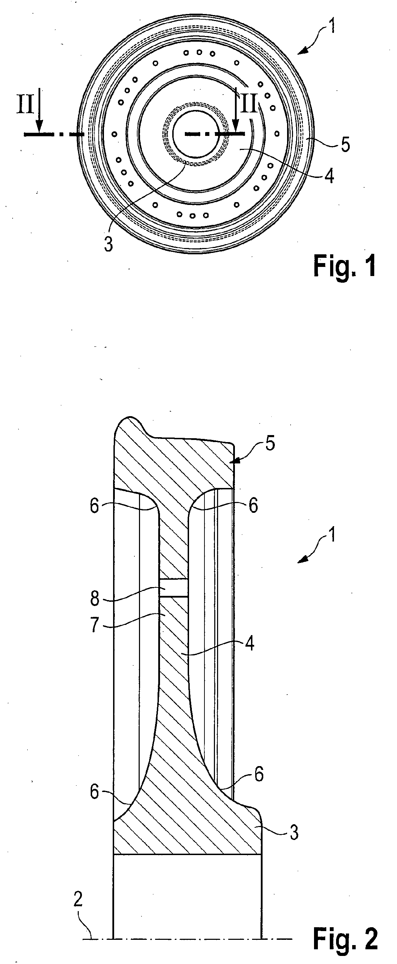

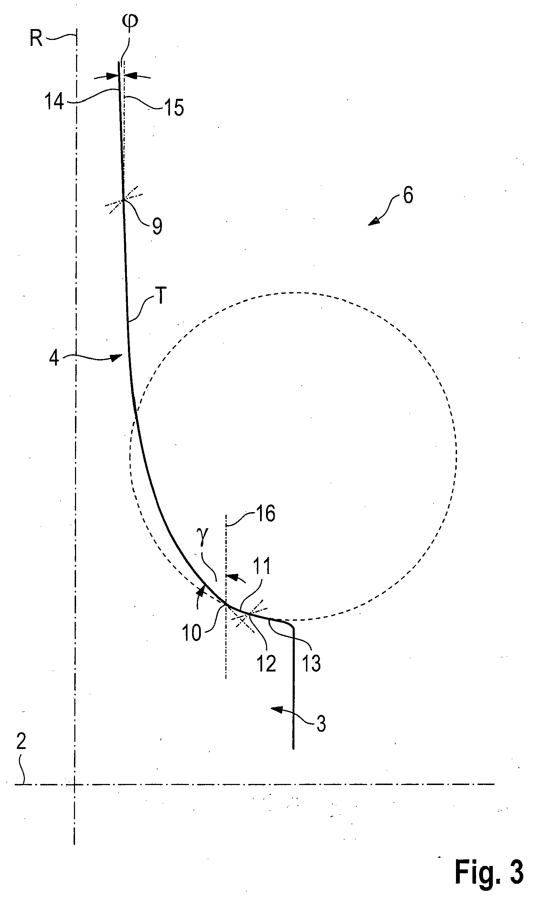

In der Darstellung der Figur 1 ist rein beispielhaft eine Seitenansicht einer Radscheibe 1 zu erkennen. Eine solche Radscheibe 1 wird als Rad für Schienenfahrzeuge verwendet. Der Aufbau ist aus dem in Figur 1 mit II - II bezeichneten Schnitt, welcher in Figur 2 zu erkennen ist, näher dargestellt. Der dargestellte Aufbau der Figur 2 ist dabei rein schematisch zur Verdeutlichung der Elemente einer Radscheibe zu verstehen. Der erfindungsgemäße Aufbau wird dann anhand der Figur 3 später noch näher erläutert. In dem radialen Schnitt der Figur 2 ist zu erkennen, dass die Radscheibe 1 aus einer eine Drehachse 2 umgebenden Radnabe 3 besteht. Diese Radnabe 3 wird über ein scheibenförmiges Bauteil, welches als Steg 4 bezeichnet wird, mit einem Radkranz 5, welcher beim Einsatz der Radscheibe 1 auf den Schienen abrollt, verbunden. Dieser Aufbau, wie er in Figur 2 dargestellt ist, ist allgemein bekannt und üblich. Es handelt sich bei der Darstellung in Figur 2 um einen Aufbau mit einem sogenannten geraden Steg 4, welcher senkrecht zur Drehachse 2 in radialer Richtung verläuft. Anstelle eines solchen geraden Stegs 4 wäre auch die an sich bekannte Verwendung eines S-förmigen Stegs, welcher sich aus zwei entgegengesetzt gebogenen Bogen in radialer Richtung zusammensetzt, denkbar.

Besonders kritisch bei Radscheiben ist der Übergang zwischen der Radnabe 3 und dem Steg 4 beziehungsweise dem Steg 4 und dem Radkranz 5. Deshalb ist es vorgesehen, dass zumindest einer dieser in der Darstellung der Figur 2 mit 6 bezeichneten Übergänge in der nachfolgend am Beispiel eines Übergangs zwischen der Radnabe 3 und dem Steg 4 beschriebenen Art und Weise ausgebildet ist. Der Übergang 6 ist dabei so ausgestattet, dass er in der radialen senkrecht auf der Drehachse 2 stehenden Richtung - welche in Figur 3 mit dem Bezugszeichen R bezeichnet ist - jeweils endet, bevor der in der Darstellung der Figur 2 verdickt dargestellte Anschlussbereich 7 beginnt, welcher zur Aufnahme von Anbauelementen oder Aufnahmeelementen für Anbauelemente vorgesehen ist. Beispielhaft ist dies in der Darstellung der Figur 2 durch eine Bohrung 8 angedeutet, welche zur Aufnahme von Anbauelementen dient. Dies können beispielsweise Bremsscheiben, Radschallabsorber oder dergleichen sein.

Die Übergänge 6 oder zumindest einer der in Figur 2 eingezeichneten Übergänge 6 der Kontur der Radscheibe 1 sind nun wie, nachfolgend an einem bevorzugten Ausführungsbeispiel erläutert, ausgeführt. Dieses ist in der schematischen Darstellung der Figur 3 zu erkennen. Die einzelnen Abschnitte sind dabei nicht maßstabsgerecht und nicht mathematisch exakt dargestellt. Die Darstellung der Figur 3 ist schematisch zu verstehen und dient dazu, die Beschreibung der Kontur zu erleichtern. Den Kern des Übergangs 6 bildet eine in der Darstellung der Figur 3 mit T bezeichnete Tangensfunktion, welche in der Darstellung beispielhaft von einem mit 9 bezeichneten Punkt in radialer Richtung nach unten bis zu dem mit 10 bezeichneten Punkt verläuft. Der mit 10 bezeichnete Punkt ist dabei idealerweise der Wendepunkt der Tangensfunktion T und geht in einen mit 11 bezeichneten Kreisbogen über, welcher ein Teil des gestrichelt eingezeichneten Kreises ist. Im Anschluss folgt ab dem mit 12 bezeichneten Punkt eine Gerade 13, welche dann in an sich bekannter Art und Weise, beispielsweise über einen Radius, in die senkrecht hierzu stehende axiale Begrenzung der Radnabe 3 übergeht. Die axiale Richtung ist wiederum durch die Drehachse 2 bezeichnet, senkrecht darauf angeordnet findet sich in der Darstellung der Figur 3 die radiale Richtung, welche mit R bezeichnet ist. Der Bereich des Stegs 4 in Richtung des hier nicht dargestellten Radkranzes 5 läuft nach dem mit 9 bezeichneten Punkt als Gerade 14 weiter, wobei diese Gerade einen Winkel $\varphi$ zu der radialen beziehungsweise senkrechten Richtung R aufweist. Der Winkel $\varphi$ ist in der Darstellung der Figur 3 zwischen der Geraden 14 und einer parallel zur radialen Richtung R laufenden Achse 15 eingezeichnet. Er muss in jedem Fall größer als 0 sein, vorzugsweise größer als 0,5. Der Winkel $\varphi$ wird typischerweise unterhalb von 20° liegen. Bei dem hier dargestellten Ausführungsbeispiel ist er beispielsweise in der Größenordnung von ca. 1,5 bis 2° gewählt.

Für die Tangensfunktion T und insbesondere für den Übergang in der Tangensfunktion T in die Gerade 14 im Punkt 9 sowie in die Kontur der Radnabe 3, welche sich aus dem Kreisbogen 11 und der Geraden 13 zusammensetzt, gelten nun bestimmte Bedingungen. Grundsätzlich sind die Übergänge jeweils tangentenstetig. Nimmt man nun die Funktionsgleichung für den Tangens

$$f(x) = a \tan(bx) + c \qquad \text{Gleichung (1)}$$

so lässt sich dieser Tangens anhand einiger Parameter beeinflussen. Um den Summanden c zu eliminieren, erfolgen die nachfolgenden Betrachtungen auf der Basis eines Koordinatensystems, welches im Wendepunkt der Tangensfunktion T, welcher in der Darstellung der Figur 3 dem mit 10 bezeichneten Punkt entspricht, liegt. Ausgehend von diesem Koordinatensystem ergibt sich die Tangensfunktion dann als

$$T: f(x) = a \tan(bx) \qquad \text{Gleichung (2)}$$

wobei die Variable x in Richtung der Drehachse 2, also als axiale Variable zu verstehen ist.

Für die Gerade 14 lässt sich die folgende Gleichung ansetzen

$$g(x) = mx + d \qquad \text{Gleichung (3)}$$

Aufgrund von eventuellen vorgegebenen Konturen, welche insbesondere durch Anbauelemente und/oder Aufnahmeelemente, welche häufig normierte Anschlüsse erfordern, vorgegeben sind, ergibt sich eine Begrenzung der Tangensfunktion T in der radialen Höhe. Dies führt wiederum zu einer Begrenzung der x Koordinate, welche zur Berechnung einer geeigneten Tangensfunktion herangezogen werden kann. Eine zweite Möglichkeit, den Tangens auszuwählen, besteht darin, dass der Winkel $\gamma$ des Tangens im Wendepunkt 10 gegenüber der in der Darstellung der Figur 3 mit 16 bezeichneten Senkrechten, in der hier gewählten Variante des Koordinatensystems, also der Ordinate dieses Koordinatensystems, vorzugeben. Für einen besonders festen Übergang mit einer sehr gleichmäßigen Spannungsverteilung lässt sich dieser Winkel $\gamma$ im Bereich von 35 bis 55° auswählen, vorzugsweise im Bereich zwischen 40 und 50°.

Für das nachfolgende Beispiel wurde ein Winkel $\gamma$ von 45° gewählt. Der tan($\gamma$) nimmt in diesem Punkt dann den Wert 1 an, sodass aus der Gleichung 2 unmittelbar folgt, dass

$$a = \frac{1}{b} \qquad \text{Gleichung (4)}$$

Durch den nachfolgen als $x_1$ bezeichneten vorgegebenen Abstand in x-Richtung sowie den Startpunkt der Geraden 14 in radialer Richtung d ergibt sich dann unter Berücksichtigung des Winkels $\varphi$ die x-Koordinate $x_1$ zu

$$x_1 = \frac{d}{\dfrac{\sqrt{\tan(90° - \varphi) - 1}}{\arccos\sqrt{\dfrac{1}{\tan(90° - \varphi)}}} - \tan(90° - \varphi)} \qquad \text{Gleichung (5)}$$

sowie der Faktor b zu

$$b = \frac{\arccos\sqrt{\dfrac{1}{\tan(90° - \varphi)}}}{x_1} \qquad \text{Gleichung (6)}$$

Bei geeigneter Wahl des Winkels $\varphi$ lässt sich die Tangensfunktion T so einfach und effizient bestimmen und im fest definierten Übergangspunkt tangentenstetig an die Gerade 14 anschließen.

Da der Übergang zwischen der Tangensfunktion T und der Kontur der Radnabe 3 keinen beliebigen Anschluss ermöglicht, sondern diese aufgrund der Funktion des Tangens sehr stark einschränkt, falls die Kontur eine Gerade ist, wird idealerweise der mit 11 bezeichnete Kreisbogen tangentenstetig an die Tangensfunktion T angelegt und geht dann wiederum tangentenstetig in die Gerade 13 der Kontur über. Der Kreis, von welchem der Kreisbogen 11 einen Teil bildet, kann dabei im Prinzip beliebig gewählt werden und an einem beliebigen Punkt der Tangensfunktion T tangentenstetig in diese übergehen. Es hat sich jedoch gezeigt, dass ein Übergang zu dem Kreisbogen 11 im Wendepunkt 10 der Tangensfunktion T - wie hier dargestellt - hinsichtlich der mathematischen Erfassung besonders einfach ist.

Eine weitere sehr vorteilhafte Möglichkeit besteht darin, den Übergang zwischen der Tangensfunktion T und dem Kreisbogen 11 so zu realisieren, dass der tangentenstetige Übergang im Punkt beziehungsweise im Bereich um den Punkt der maximalen Krümmung der Tangensfunktion T erfolgt. Dieser Übergang im Punkt beziehungsweise im Bereich um den Punkt der maximalen Krümmung ist insbesondere dann hinsichtlich der Spannungsverteilung ideal, wenn der Kreisbogen 11 als Radius genau diesen maximalen Krümmungsradius der zuvor ermittelten Tangensfunktion T aufweist. Dadurch, dass die Krümmungen stetig ineinander übergehen, ergibt sich ein idealer Aufbau hinsichtlich der Spannungsverteilung. Dies führt zu einer hohen Festigkeit des so ausgebildeten Übergangs 6. Dieser Kreisbogen 11 kann dann wieder tangentenstetig in die Gerade 13 überführt werden, welche aufgrund des zwischen die Tangensfunktion T und die Gerade 13 gelegten Kreisbogens 11 in ihrer Lage und ihrem Winkel vergleichsweise frei gewählt werden kann, um beispielsweise eine gewünschte oder vorgegebene axiale Außenkontur der Radnabe 3 zu ermöglichen.

Insgesamt erlaubt der Aufbau durch eine Harmonisierung der Spannungsverteilungen eine sehr hohe Festigkeit bei minimalem Materialeinsatz und ohne dass aufwändige Verfahren wie beispielsweise eine Verfestigung des Materials im Bereich des Übergangs notwendig werden. Ungeachtet dessen kann die Festigkeit durch solche Verfahren zur Oberflächenverfestigung weiter gesteigert werden. Die Verfahren können dabei sowohl mechanisch (Kugelstrahlen, Rollieren, etc.) als auch werkstofftechnisch/chemisch (Einsatzhärten, Nitrieren, etc.) ausgebildet sein.

**Patentansprüche**

1. Radscheibe (1) für ein Schienenfahrzeug mit

   1.1 einer eine Drehachse (2) umgebenden Radnabe (3);
   1.2 einem Radkranz (5); und
   1.3 einem die Radnabe (3) mit dem Radkranz (5) verbindenden Steg (4);

   **dadurch gekennzeichnet, dass**

   1.4 ein Übergang (6) zwischen dem Steg (4) und der Radnabe (3) und/oder ein Übergang (6) zwischen dem Steg (4) und dem Radkranz (5) auf wenigstens einer axialen Seite in jeder radialen Schnittebene so ausgebildet ist, dass
   1.5 der Übergang (6) durch eine Tangensfunktion (T) ausgebildet ist,
   1.6 die Tangensfunktion (T) tangentenstetig in die Kontur des Stegs (4) übergeht; und
   1.7 die Tangensfunktion (T) tangentenstetig in die Kontur der Radnabe (3) oder des Radkranzes (5) übergeht.

2. Radscheibe (1) nach Anspruch 1, **dadurch gekennzeichnet, dass** der tangentenstetige Übergang der Tangensfunktion (T) in die Kontur der Radnabe (3) oder des Radkranzes (5) im Bereich des Wendepunkts (10) der Tangensfunktion (T) erfolgt.

3. Radscheibe (1) nach Anspruch 1 oder 2, **dadurch gekennzeichnet, dass** die Kontur der Radnabe (3) oder des Radkranzes (5) im Anschluss an die Tangensfunktion (T) durch einen Kreisbogen (11) und eine sich diesem Kreisbogen (11) anschließenden Gerade (13) gebildet ist, wobei der Kreisbogen (11) tangentenstetig in die Gerade (14) übergeht.

4. Radscheibe (1) nach Anspruch 3, **dadurch gekennzeichnet, dass** der tangentenstetige Übergang der Tangensfunktion (T) in den Kreisbogen (11) im Bereich der maximalen Krümmung der Tangensfunktion (T) erfolgt.

5. Radscheibe (1) nach Anspruch 4, **dadurch gekennzeichnet, dass** ein Radius des Kreisbogens (11) dem maximalen Krümmungsradius der Tangensfunktion (T) entspricht.

6. Radscheibe (1) nach einem der Ansprüche 1 bis 5, **dadurch gekennzeichnet, dass** ein Winkel ($\varphi$) der Tangensfunktion (T) im Wendepunkt (10) gegenüber der Ordinate 35 - 55°, vorzugsweise 40 - 50°, besonders bevorzugt ca. 45° beträgt.

7. Radscheibe (1) nach einem der Ansprüche 1 bis 6, **dadurch gekennzeichnet, dass** die Kontur des Stegs (4) im Anschluss an die Tangensfunktion (T) eine Anschlusskontur in Form eines Bogens aufweist.

8. Radscheibe (1) nach einem der Ansprüche 1 bis 6, **dadurch gekennzeichnet, dass** die Kontur des Stegs (4) im Anschluss an die Tangensfunktion (T) eine Anschlusskontur in Form einer Geraden (14) aufweist, wobei die Gerade (13) um einen Winkel ($\varphi$) von weniger als 20°, vorzugsweise von 0,5 - 15°, zur radialen Richtung (15) geneigt ausgebildet ist.

9. Radscheibe (1) nach Anspruch 7 oder 8, **dadurch gekennzeichnet, dass** die Tangensfunktion (T) so ausgebildet ist, dass der tangentenstetige Übergang zur Anschlusskontur abgeschlossen ist, bevor in wenigstens einem der radialen Schnitte ein Anschlussbereich (7) für ein Aufnahmeelement und/oder Anbauelement an dem Steg (4) angeordnet ist.

**Claims**

1. A wheel disk (1) for a rail vehicle, comprising

   1.1 a wheel hub (3) enclosing a rotational axis (2);
   1.2 a wheel rim (5), and
   1.3 a wheel web (4) connecting the wheel hub (3) with the wheel rim (5),

   **characterized in that**

   1.4 a transition (6) between the wheel web (4) and the wheel hub (3) and/or a transition (6) between the wheel web (4) and the wheel rim (5) is arranged at least on one axial side in each radial intersecting plane in such a way that
   1.5 the transition (6) is formed by a tangent function (T);
   1.6 the tangent function (T) converges by tangential continuity into the contour of the wheel web (4), and
   1.7 the tangent function (T) converges by tangential continuity into the contour of the wheel hub (3) or wheel rim (5).

2. A wheel disk (1) according to claim 1, **characterized in that** the transition by tangential continuity of the tangent function (T) into the contour of the wheel hub (3) or the wheel rim (5) occurs in the region of the inflection point (10) of the tangent function (T).

3. A wheel disk (1) according to claim 1 or 2, **characterized in that** the contour of the wheel hub (3) or the wheel rim (5) after the tangent function (T) is formed by a circular arc (11) and a straight line (13) following said circular arc (11), wherein the circular arc (11) converges by tangential continuity into the straight line (14).

4. A wheel disk (1) according to claim 3, **characterized in that** the transition of the tangent function (T) by tangential continuity into the circular arc (11) occurs in the region of the maximum curvature of the tangent function (T).2

5. A wheel disk (1) according to claim 4, **characterized in that** a radius of the circular arc (11) corresponds to the maximum radius of curvature of the tangent function (T).

6. A wheel disk (1) according to one of the claims 1 to 5, **characterized in that** an angle ($\varphi$) of the tangent function (T) in the inflection point (10) is 35 to 55°, preferably 40 to 50°, more preferably approx. 45°, in relation to the ordinate.

7. A wheel disk (1) according to one of the claims 1 to 6, **characterized in that** the contour of the wheel web (4) has a subsequent contour in form of an arc after the tangent function (T).

8. A wheel disk (1) according to one of the claims 1 to 6, **characterized in that** the contour of the wheel web (4) has a subsequent contour in form of a straight line (14) after the tangent function (T), wherein the straight line (13) is angularly arranged about an angle ($\varphi$) of less than 20°, preferably 0.5 to 15°, in relation to the radial direction (15).

9. A wheel disk (1) according to claim 7 or 8, **characterized in that** the tangent function (T) is arranged in such a way that the transition by tangential continuity to the subsequent contour is completed before a connecting region (7) for a receiving element and/or an add-on element is arranged in the wheel web (4) in at least one of the radial sections.

**Revendications**

1. Disque de roue (1) pour un véhicule ferroviaire avec

   1.1. un moyeu (3) entourant un axe de rotation (2) ;
   1.2. une jante (5) ; et
   1.3. une toile de roue (4) reliant le moyeu (3) avec la jante (5) ;

   **caractérisé en ce que**

   1.4. une transition (6) entre la toile de roue et le moyeu (3) et/ou une transition (6) entre la toile de roue (4) et la jante (5) sur au moins une face axiale est réalisée dans chaque plan de coupe radial de telle sorte que

1.5. la transition (6) est formée par une fonction de tangente (T),

1.6. la fonction de tangente (T) se raccorde en continuité de tangente au contour de la toile de roue (4) ; et que

1.7. la fonction de tangente (T) se raccorde en continuité de tangente au contour du moyeu (3) ou de la jante (5).

**2.** Disque de roue (1) selon la revendication 1, **caractérisé en ce que** la transition à continuité de tangente de la fonction de tangente (T) vers le contour du moyeu (3) ou de la jante (5) se fait au niveau du point d'inflexion (10) de la fonction de tangente (T).

**3.** Disque de roue (1) selon la revendication 1 ou 2, **caractérisé en ce que**, après la fonction de tangente (T), le contour du moyeu (3) ou de la jante (5) est formé par un arc de cercle (11) et par une droite (13) qui se raccorde à cet arc de cercle, ledit arc de cercle (11) se raccordant à ladite droite (14) en continuité de tangente.

**4.** Disque de roue (1) selon la revendication 3, **caractérisé en ce que** la transition en continuité de tangente de la fonction de tangente (T) à l'arc de cercle (11) se fait au niveau de la courbure maximale de la fonction de tangente (T).

**5.** Disque de roue (1) selon la revendication 4, **caractérisé en ce qu'**un rayon de l'arc de cercle (11) correspond au rayon de courbure maximal de la fonction de tangente (T).

**6.** Disque de roue (1) selon l'une des revendications 1 à 5, **caractérisé en ce qu'**un angle ($\varphi$) de la fonction de tangente (T) par rapport à l'ordonnée au niveau du point d'inflexion (10) est compris entre 35° et 55°, de préférence entre 40° et 50°, et tout particulièrement égal à environ 45°.

**7.** Disque de roue (1) selon l'une des revendications 1 à 6, **caractérisé en ce que** le contour de la toile de roue (4) à la suite de la fonction de tangente (T) présente un contour de suite qui prend la forme d'un arc.

**8.** Disque de roue (1) selon l'une des revendications 1 à 6, **caractérisé en ce que** le contour de la toile de roue (4) à la suite de la fonction de tangente (T) présente un contour de suite qui prend la forme d'une droite (14), ladite droite (13) étant inclinée par rapport à la direction radiale (15) selon un angle ($\varphi$) inférieur à 20° et compris de préférence entre 0,5 et 15°.

**9.** Disque de roue (1) selon la revendication 7 ou 8, **caractérisé en ce que** la fonction de tangente (T) est formée de telle sorte que la transition en continuité de tangente vers le contour de suite est achevée avant qu'une zone de raccordement (7) d'un élément de réception et/ou d'un élément rapporté soit agencée sur la toile de roue (4) au niveau d'au moins une des coupes radiales.

**Fig. 1**

**Fig. 2**

R φ

14 15

9

6

T

4

16

γ

11

10

12 13

3

2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4444077 A1
- EP 0794872 A1